# FASCICULE DE BREVET EUROPEEN

(11) **EP 0 715 942 B1**
(45) Date de publication et mention de la délivrance du brevet: **19.06.1996**
(21) Numéro de dépôt: 94440058.9
(22) Date de dépôt: 19.09.1994
(51) Int. Cl.: B29C 53/06, B65D 1/46

(54) **Procédé de réalisation d'un jonc périphérique pour contenant du type barquette**
Verfahren zum Formen eines Bördels an einem schalenförmigen Behälter
Method for making a peripheral rim for a tray-type container

(43) Date de publication de la demande: 12.06.1996
(73) Titulaire: GROUPE GUILLIN, F-25290 Ornans (FR)
(72) Inventeur: Guillin, François, F-25920 Mouthier Hautepierre (FR)
(74) Mandataire: Littolff, Denis

(56) Documents cités:
- EP-A- 0 219 442
- CH-A- 413 718
- FR-A- 2 110 709
- US-A- 3 551 940
- US-A- 3 907 193

## Description

La présente invention concerne un procédé de réalisation d'un rebord ou bordure allure cylindrique, ou jonc situé sur la périphérie d'un contenant en matériau synthétique, tel qu'une barquette destinée à contenir des produits frais, alimentaires ou autres, recouverts d'un film plastifié.

De tels joncs existent déjà par exemple sur les gobelets en plastique, distribués dans les distributeurs automatiques de boissons. L'effet est à la fois fonctionnel, adoucissant le contact entre les lèvres et le rebord supérieur du gobelet, et esthétique, les récipients munis de joncs étant beaucoup plus prisés par les professionnels, parce que présentant une apparence esthétique très supérieure à celle offerte par un produit similaire dépourvu du jonc, notamment parce qu'ils présentent un élément de volume, lequel augmente par ailleurs la rigidité.

Pour les gobelets, le jonc externe est réalisé par thermoformage d'un bord externe orienté initialement sensiblement perpendiculairement à l'axe du gobelet, qu'on introduit entre deux structures mécaniques d'axes parallèles s'apparentant à des vis sans fin, dont le filetage est une gorge hélicoïdale dont le pas se raccourcit au fur et à mesure de la progression du gobelet. De la sorte, la bordure externe est progressivement enroulée par thermoformage, à la fois vers l'axe et vers le fond du gobelet, produisant finalement un rebord externe d'allure cylindrique, le jonc.

Il est clair qu'un tel procédé ne peut s'appliquer qu'à des volumes de révolution comme des gobelets, et n'est donc pas applicable à des volumes d'allure plus prismatique tels que des barquettes.

C'est pourquoi, dans la plupart des cas, lesdites barquettes n'en comportent pas, se contentant d'un rebord externe plus ou moins replié en direction du fond, et plus rarement vers l'intérieur du volume. Outre la lacune esthétique que cela procure, notamment aux yeux des gens du métier chargés de distribuer ou d'exploiter ces produits, cette configuration comporte un inconvénient technique important.

Dans nombre de cas, ces barquettes sont utilisées conjointement avec des films plastifiés qui recouvrent le produit qu'elles contiennent, l'offrant à la vue de l'acheteur et le plaquant simultanément contre le fond de la barquette. Ces films enrobent en fait l'ensemble du volume complexe constitué par la barquette et les produits qu'elle renferme, et ils sont tendus autour de ce volume. La tension exercée est généralement assez forte, et elle s'applique notamment au niveau des bordures externes dépourvues de joncs. Il se produit à ces endroit un cisaillement résultant de la forme non arrondie et de la faible épaisseur du matériau. Il faut donc prévoir le film en conséquence, sauf à courir le risque d'une rupture évidemment fâcheuse, tant pour le produit que pour le distributeur, voire le fabricant.

Le but de l'invention est par conséquent de proposer un procédé original pour obtenir un jonc périphérique externe sur des contenants en matière synthétique qui ne sont pas forcément des volumes de révolution.

A cet effet, le procédé se caractérise en ce que le rebord fait l'objet d'une préforme au cours de l'opération de thermoformage à plat ou d'injection du contenant, en périphérie du flan de matière plastique utilisé pour sa fabrication, puis est constitué par pliage de manière à former le relief de la bordure, ledit pliage étant maintenu replié par fixation au corps principal dudit contenant.

Dans la suite, on prendra comme exemple une réalisation par thermoformage, étant entendu qu'il est possible de remplacer ledit thermoformage par un procédé basé sur l'injection, avec les détails opératoires adaptés à ce second mode, qui sont connus de l'homme de l'art.

Selon une possibilité, on réalise au cours du thermoformage initial une périphérie comportant deux semi-cylindres, ou plus généralement deux demi-volumes, préférentiellement symétriques par rapport à un plan perpendiculaire au plan de réalisation du thermoformage à plat, et passant par la ligne périphérique localisée entre les deux demi-volumes. Ces deux demi-volumes sont reliés par une section de raccordement située sensiblement dans le plan du rebord du contenant, et ils s'étendent parallèlement.

Lorsqu'on choisit deux semi-cylindres à section semi-circulaire, on obtient le résultat généralement considéré comme préférentiel, à savoir un jonc périphérique à section circulaire, esthétiquement et fonctionnellement compatible avec la définition du produit.

Toutefois, la réalisation du jonc implique une étape supplémentaire, afin de faciliter l'opération de plage. Lorsqu'on se contente de thermoformer le flan initial de manière à donner à sa bordure périphérique une forme telle qu'après pliage, on se retrouve avec un volume périphérique fermé, ledit pliage s'effectue difficilement à cause de la rigidité relative du matériau synthétique et de l'épaisseur uniforme du flan thermoformé, qui n'implique aucune ligne de pliage particulière. Celui-ci peut donc avoir lieu potentiellement à n'importe quel endroit, et les manipulations ou automatisations visant à choisir une ligne précise pour ce pliage sont relativement compliquées.

C'est pourquoi un rainage est pratiqué dans la section de raccordement reliant les deux demi-volumes destinés à former le jonc fermé. Ce rainage, assouplissant au surplus ladite section, est réalisé à l'aide d'un couteau ou équivalent exerçant une pression perpendiculaire aux génératrices des demi-cylindres, et situé sensiblement dans le plan de symétrie mentionné auparavant.

Il permet la compression des fibres du matériau dans la zone séparant les demi-volumes, de sorte que le pivotement ultérieur de l'un vers l'autre est rendu plus aisé. Ce rainage constitue en fait l'axe de pivotement autour duquel a lieu le pliage. Le résultat auquel on aboutit après pliage est de mettre en vis-à-vis les deux cavités internes des demi-volumes, de manière à créer un volume plein dont l'enveloppe extérieure offre une apparente continuité, à l'exception de la ligne de pliage légèrement rainée.

L'opération de rainage provoque un écrasement des fibres qui se resserrent entre elles. Cependant, elles ne sont pas sectionnées. Par conséquent, la résistance mécanique de la charnière existant de fait au niveau dudit rainage n'est pas inférieure à celle que l'on trouve à d'autres endroits du flan thermoformé. Il se produit en réalité un assouplissement sans affaiblissement.

La dernière opération à réaliser pour que le jonc soit définitivement réalisé est sa fixation au corps principal du contenant après le pliage. A cet effet, le demi-volume extérieur ou distal se prolonge avantageusement par une bordure plane parallèle à la ligne périphérique de bordure du contenant, et le demi-volume intérieur ou proximal est séparé de la cavité du contenant par un rebord plan sensiblement de même largeur que la bordure externe.

Au moment du pliage, la bordure externe vient en vis-à-vis du rebord de la cavité, sur lequel on peut la fixer, par exemple par soudage. Le jonc périphérique est ainsi pérennisé, et le contenant muni de son jonc est reconnu comme ayant un bon aspect de finition, ne générant pas de problèmes de sectionnement intempestif du film plastifié. Cette fixation rigidifie également le jonc.

On a mentionné auparavant le fait que le procédé de la présente invention est adapté pour réaliser des joncs sur des contenants qui ne sont pas des volumes de révolution. Cela ne signifie toutefois pas que les volumes concernés ne sont pas dotés d'arrondis, par exemple au niveau des changements de direction des arêtes. Le procédé de base est alors celui qui est décrit ci-dessus, avec une opération supplémentaire consistant en la découpe à l'onglet de segments par incisions radiales permettant la réalisation d'une segmentation approximant les arrondis et permettant de généraliser le procédé à de nombreux cas d'espèce.

Un tel procédé couvre donc une large gamme de produits, ainsi que la description plus détaillée qui suit le fera apparaître. Celle-ci est effectuée en référence aux dessins annexés, pour lesquels :
- Les figures 1a et 1b sont des schémas montrant les deux possibilités offertes par l'invention;
- La figure 2 représente un détail agrandi de la charnière séparant deux demi-volumes et du moyen de rainage;
- La figure 3 resitue la figure 2 dans un contexte plus large;
- La figure 4 montre une section d'une barquette à laquelle s'applique le procédé de l'invention, et
- La figure 5 est une vue perspective d'une portion d'une telle barquette munie d'un jonc selon l'invention.

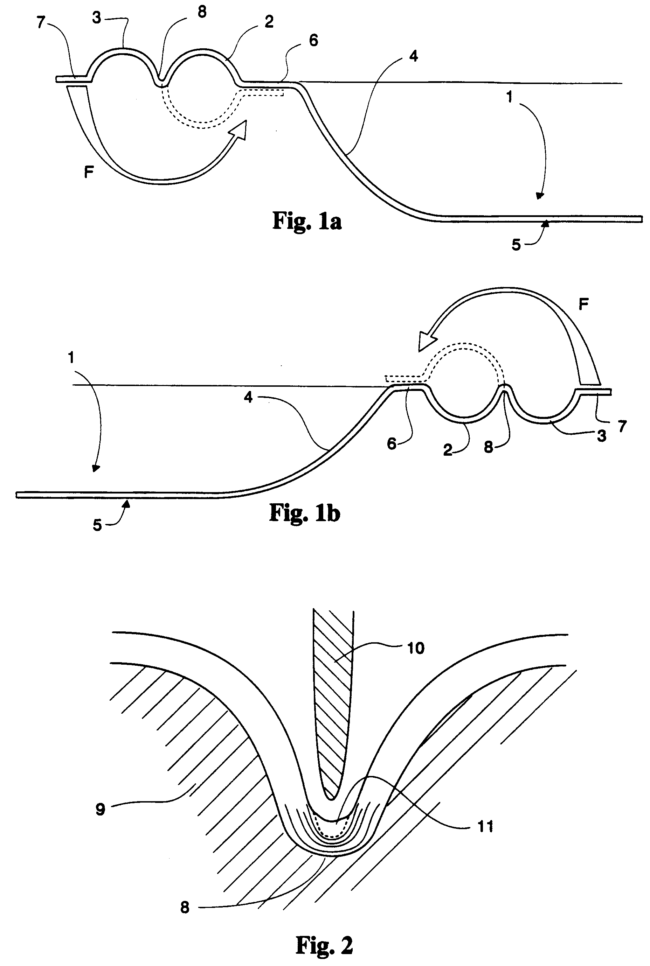

Les figures 1a et 1b montrent les deux versions possibles de préformage du jonc, pour une configuration de jonc à section circulaire.

Dans le premier cas (figure 1a), les demi-cylindres sont orientés vers le haut, et le pliage s'effectue par conséquent vers le bas. Les demi-cylindres (2, 3) sont positionnés en périphérie de la barquette (1), dans le prolongement de la paroi (4) bordant le contenant. De part et d'autre de ces demi-cylindres (2, 3), deux portions (6, 7) sensiblement parallèles au fond (5) de la barquettes (1) permettent la fixation en position repliée (représentée en trait pointillé). Le mouvement de pliage est représenté par la flèche F.

Dans le second cas, les demi-cylindres (2, 3) sont orientés vers le bas, leur cavité intérieure ouverte vers le haut. Pour le reste, la configuration est très similaire à celle représentée en figure 1a. La fonction des portions planes (6, 7) apparaît bien sur ces figures, à la lumière de la figuration du pliage réalisée en trait pointillé. La portion 6 agit en réalité comme support de fixation pour la portion 7 en position repliée. La surface de contact entre elles laisse le choix entre différents types de fixation : par collage, soudage, (ultrasons ...) etc.

Les demi-cylindres (2, 3) ainsi que les portions planes correspondantes (6, 7) sont réalisés au cours de l'opération de thermoformage initiale.

Toutefois, le pliage de la feuille de matière synthétique tel que représenté en trait pointillé est théorique. En réalité, il faut rendre la section de raccordement (8) entre les demi-cylindres (2, 3) souple afin qu'il puisse s'effectuer correctement.

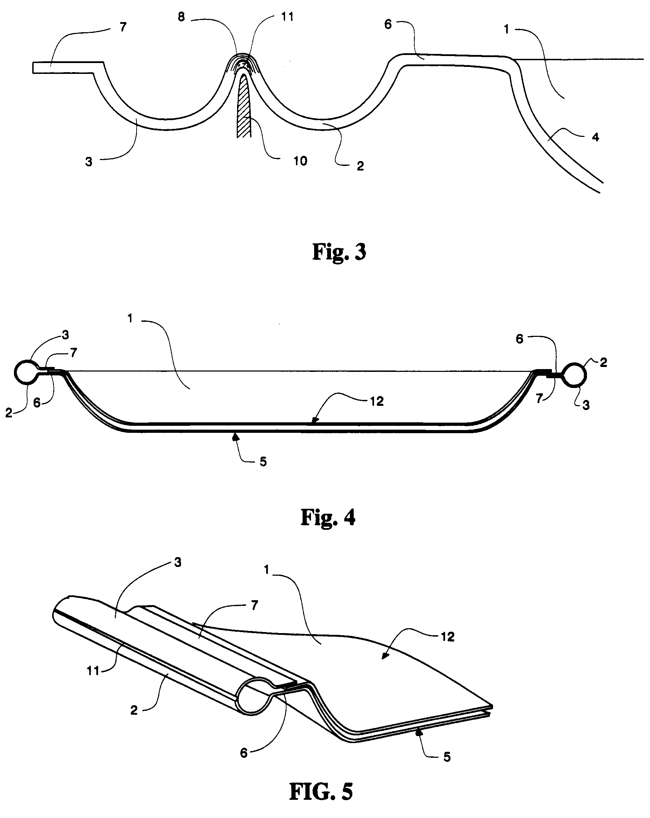

C'est ce qui est représenté en figure 2, qui montre un détail agrandi de la partie de raccordement, positionnée sur la contre-plaque (9) de thermoformage, avec une schématisation du couteau (10) d'assouplissement. Ce dernier exerce une pression dans le fond de la cavité (8) de raccordement, de manière à comprimer les fibres du matériau, sans toutefois les sectionner. Les fibres serrées conservent à la liaison sa résistance mécanique et assouplissent cette portion. On a représenté en trait pointillé le rainage (11) comprimant quelques fibres symboliquement placées sous la rainure. La figure 3 replace dans un contexte plus large la vue de la figure 2, pour une configuration inversée, avec les demi-cylindres (2, 3) orientés vers le bas.

Lorsque le rainage est réalisé, le pliage s'effectue aisément, exactement au niveau où il doit avoir lieu pour que les portions planes (6, 7) viennent au contact l'une de l'autre de manière à assurer de bonnes conditions de fixation.

La figure 4 montre une section transversale de la totalité d'une barquette, qui est en réalité une vue de l'esprit car les deux variantes de jonc sont présentes, une par côté, contrairement à ce qui se ferait au cours d'une fabrication réelle. Le but de cette modélisation est d'une part de fixer les idées sur les deux configurations possibles, et d'autre part d'attirer l'attention sur une particularité intéressante offerte par les joncs dans l'une des variantes.

Les barquettes à produit frais sont souvent utilisées en combinaison avec des faux-fonds de manière à créer un volume interne destiné à recueillir les exsudats desdits produits. Ces faux-fonds (12) sont également soudés (collés) sur les surfaces périphériques planes proximales (6), ou à tout le moins posés sur ces plans. Le jonc situé à gauche enserre ledit faux-fond (12) alors que celui de droite ne fait que le supporter par le biais de ladite surface (6).

L'une des fonctions du jonc est de rigidifier la barquette (1), et la triple épaisseur résultant de l'enserrement du faux-fond (12) par les deux portions planes (6, 7) périphériques contribue à augmenter cette rigidification.

Il est à noter que, même en l'absence du faux-fond (12), l'existence même du jonc améliore sensiblement la rigidité, du fait de la soudure des deux portions planes. Par comparaison avec un jonc roulé, comme sur les gobelets, qui ne comprend qu'une seule ligne d'attache sur le corps principal, la rigidité est très supérieure.

La figure 5 n'a que pour objet de montrer en perspective l'aspect d'un tel jonc, avec une possibilité de voir le rainage tel qu'il apparaît en réalité. L'arrondi extérieur, bien visible, n'exerce aucune contrainte de cisaillement sur le film plastifié.

Bien entendu, les différentes figures illustrent une configuration possible de l'invention, avec un jonc à section quasi-circulaire. Mais l'invention n'est pas limitée à cette version, et comprend au contraire d'autres formes obtenues à l'aide du même procédé.

## Revendications

1. Procédé de réalisation d'une bordure d'allure cylindrique ou jonc sur la périphérie d'un contenant (1) obtenu par thermoformage ou injection d'un flan en matériau synthétique, caractérisé en ce que ledit rebord fait l'objet d'une préforme au cours de l'opération de thermoformage à plat ou d'injection du contenant (1), en périphérie du flan, puis est constitué par pliage de manière à former le relief de la bordure, ledit pliage étant ensuite maintenu replié par fixation au corps principal du contenant (1).

2. Procédé de réalisation d'une bordure selon la revendication 1, caractérisé en ce que le préformage périphérique est constitué de deux demi-volumes (2, 3) s'étendant parallèlement le long de la ligne de périphérie du contenant (1) et reliés par une section de raccordement (8) située sensiblement dans le plan du rebord du contenant (1).

3. Procédé de réalisation d'une bordure selon la revendication précédente, caractérisé en ce que les deux demi-volumes (2, 3) sont symétriques par rapport à un plan perpendiculaire au plan de réalisation du thermoformage à plat et passant par la section de raccordement (8).

4. Procédé de réalisation d'une bordure selon la revendication précédente, caractérisé en ce que les deux demi-volumes (2, 3) sont des demi-cylindres à section semi-circulaire.

5. Procédé de réalisation d'une bordure selon l'une quelconque des revendications précédentes, caractérisé en ce que la section de raccordement (8) entre les deux demi-volumes (2, 3) est assouplie et rainée au moyen d'un couteau ou équivalent (10) exerçant une pression selon une direction sensiblement parallèle à la ligne de périphérie du contenant (1) afin de comprimer les fibres du matériau synthétique dans la zone entre les deux demi-volumes (2, 3) pour permettre le pivotement de l'une par rapport à l'autre.

6. Procédé de réalisation d'une bordure selon la revendication précédente, caractérisé en ce que, par rapport au centre du contenant (1), le demi-volume distal (3) est repliable suivant l'axe de pivotement constitué par le rainage (11) pratiqué dans la section de raccordement (8), de telle sorte que la cavité intérieure de ce demi-volume vienne en vis-à-vis de la cavité intérieure du demi-volume proximal (2).

7. Procédé de réalisation d'une bordure selon la revendication précédente, caractérisé en ce que le demi-volume distal (3) se prolonge par une portion plane (7) d'allure parallèle à la ligne de périphérie du contenant (1) proprement dit, alors que le demi-volume proximal (2) est relié à ladite ligne de périphérie par une autre portion plane (6) coplanaire, sur laquelle la première (7) est fixée après repliage.

8. Procédé de réalisation d'une bordure selon l'une des revendications précédentes, caractérisé en ce que le rebord périphérique est segmenté par des incisions radiales dans les zones périphériques arrondies.

## Claims

1. Process for producing a rim with a cylindrical or bead-shaped appearance on the periphery of a container (1) obtained by thermoforming or injection moulding a blank made of synthetic material, characterized in that the said rim is preformed on the periphery of the blank while the container (1) is thermoformed flat or injection moulded, and is then constituted by folding so as to form the embossed shape of the rim, the said fold being then kept folded by fixing to the main body of the container (1).

2. Process for producing a rim according to claim 1, characterized in that the peripheral preform consists of two half-volumes (2, 3) extending in a parallel manner along the peripheral line of the container (1) and being attached by a connecting section (8) situated essentially in the plane of the lip of the container (1).

3. Process for producing a rim according to the preceding claim, characterized in that the two half-volumes (2, 3) are symmetrical in relation to a plane perpendicular to the plane in which flat thermoforming is carried out and pass through the connecting section (8).

4. Process for producing a rim according to the preceding claim, characterized in that the two half-volumes (2, 3) are half-cylinders with a semi-circular cross section.

5. Process for producing a rim according to any one of the preceding claims, characterized in that the connecting section (8) between the two half-volumes (2, 3) is made flexible and grooved by means of a knife or the equivalent (10) exerting a pressure in a direction essentially parallel to the peripheral line of the container (1) so as to compress the fibres of synthetic material in the zone between the two half-volumes (2, 3) so as to enable them to pivot in relation to each other.

6. Process for producing a rim according to the preceding claim, characterized in that, in relation to the centre of the container (1), the distal half-volume (3) can be folded along the pivoting axis consisting of the groove (11) made in the connecting section (8) such that the internal cavity of this half volume comes opposite the internal cavity of the proximal half-volume (2).

7. Process for producing a rim according to the preceding claim, characterized in that the distal half-volume (3) is extended by a flat portion (7) running parallel to the peripheral line of the container (1) itself, while the proximal half volume (2) is connected to the said peripheral line by another coplanar flat portion (6), to which the first (7) is attached after folding.

8. Process for producing a rim according to one of the preceding claims, characterized in that the peripheral lip is segmented by radial incisions in the rounded peripheral zones.

## Patentansprüche

1. Verfahren zum Herstellen einer Einfassung mit zylindrischem Verlauf oder eines Wulstes am Umfang eines Behältnisses (1), das durch Wärmeverformung oder Spritzen einer Platte aus Kunststoffmaterial erhalten wird, dadurch gekennzeichnet, daß der Rand während des Vorgangs der ebenen Wärmeverformung oder des Spritzens des Behältnisses (1) Gegenstand eines Vorformlings am Umfang der Platte ist und dann durch Biegen in der Weise gebildet wird, daß das Relief der Einfassung gebildet wird, wobei der gebogene Zustand anschließend durch Befestigen des gebogenen Teils am Hauptkörper des Behältnisses (1) aufrechterhalten wird.

2. Verfahren zum Herstellen einer Einfassung nach Anspruch 1, dadurch gekennzeichnet, daß die Vorformung am Umfang aus zwei Halbvolumina (2, 3) gebildet ist, die längs der Umfangslinie des Behälters (1) parallel verlaufen und über einen Verbindungsabschnitt (8), der sich im wesentlichen in der Ebene des Randes des Behälters (1) befindet, verbunden sind.

3. Verfahren zum Herstellen einer Einfassung nach dem vorangehenden Anspruch, dadurch gekennzeichnet, daß die zwei Halbvolumina (2, 3) in bezug auf eine Ebene, die zur Ebene der Ausbildung der ebenen Wärmeverformung senkrecht ist und durch den Verbindungsabschnitt (8) verläuft, symmetrisch sind.

4. Verfahren zum Herstellen einer Einfassung nach dem vorangehenden Anspruch, dadurch gekennzeichnet, daß die zwei Halbvolumina (2, 3) Halbzylinder mit halbkreisförmigem Querschnitt sind.

5. Verfahren zum Herstellen einer Einfassung nach irgendeinem der vorangehenden Ansprüche, dadurch gekennzeichnet, daß der Verbindungsabschnitt (8) zwischen den zwei Halbvolumina (2, 3) mittels eines Messers oder dergleichen (10) gelenkig gemacht und gerippt wird, indem mit dem Messer oder dergleichen in einer zur Umfangslinie des Behältnisses (1) im wesentlichen parallelen Richtung ein Druck ausgeübt wird, um die Fasern des Kunststoffmaterials in der Zone zwischen den zwei Halbvolumina (2, 3) zu komprimieren, um die Schwenkung des einen in bezug auf das andere zu ermöglichen.

6. Verfahren zum Herstellen einer Einfassung nach dem vorangehenden Anspruch, dadurch gekennzeichnet, daß das in bezug auf die Mitte des Behälters (1) entfernt befindliche Halbvolumen (3) längs der Schwenkachse umgebogen werden kann, die durch die im Verbindungsabschnitt (8) ausgebildete Rille (11) gegeben ist, derart, daß der Innenhohlraum dieses Halbvolumens gegenüber dem Innenhohlraum des nahe befindlichen Halbvolumens (2) angeordnet wird.

7. Verfahren zum Herstellen einer Einfassung nach dem vorangehenden Anspruch, dadurch gekennzeichnet, daß das entfernt befindliche Halbvolumen (3) durch einen ebenen Abschnitt (7) mit einem zur Umfangslinie des eigentlichen Behältnisses (1) parallelen Verlauf verlängert ist, während das nahe befindliche Halbvolumen (2) mit der Umfangslinie durch einen anderen, koplanaren, ebenen Abschnitt (6), auf dem der erste (7) nach dem Umbiegen befestigt wird, verbunden wird.

8. Verfahren zum Herstellen einer Einfassung nach einem der vorangehenden Ansprüche, dadurch gekennzeichnet, daß der Umfangsrand durch radiale Einschnitte in den abgerundeten Umfangszonen unterteilt ist.
